# NEUE EUROPÄISCHE PATENTSCHRIFT

(11) **EP 1 399 674 B2**
(45) Veröffentlichungstag und Bekanntmachung des Hinweises auf die Entscheidung über den Einspruch: **26.02.2020**
(45) Hinweis auf die Patenterteilung: 21.12.2016
(21) Anmeldenummer: 02732657.8
(22) Anmeldetag: 24.04.2002
(51) Int. Cl.: F03D 7/04

(54) **METHODE ZUR MAXIMIERUNG DER ENERGIEAUSBEUTE EINER WINDTURBINE**
METHOD FOR MAXIMIZING THE ENERGY OUTPUT OF A WIND TURBINE
PROCEDE PERMETTANT D'OPTIMALISER LE RENDEMENT ENERGETIQUE D'UNE TURBINE EOLIENNE

(30) Priorität: 07.06.2001 DE 10127451
(43) Veröffentlichungstag der Anmeldung: 24.03.2004
(60) Teilanmeldung: 06110622.5
(73) Patentinhaber: Wobben Properties GmbH, 26607 Aurich (DE)
(72) Erfinder: Wobben, Aloys, 26607 Aurich (DE)
(74) Vertreter: Eisenführ Speiser
(86) Internationale Anmeldenummer: PCT/EP2002/004485
(87) Internationale Veröffentlichungsnummer: WO 2002/099277

(56) Entgegenhaltungen:
- EP-A- 0 644 331
- WO-A1-87/00312
- DE-A- 19 532 409
- DE-A- 19 934 415
- DE-A1- 4 019 710
- DE-A1- 19 846 818
- DE-C1- 19 628 073
- US-A- 4 160 170
- US-A- 4 613 762
- US-A- 5 402 332
- US-A- 5 652 485
- US-A- 5 798 631
- US-B2- 6 608 397
- T. TANAKA ET AL.: 'Output control by hill-climbing method for a small scale wind power generating system' RENEWABLE ENERGY Bd. 12, Nr. 4, Seiten 387 - 400
- FARRET, F. et al: "Active YAW control with sensorless wind speed and direction measurements for horizontal axis wind turbines", Devices, Circuits and Systems, 2000. Proceedings of the 2000 Third IEE E International Caracas Conference on March 15-17, 2000, 15 March 2000 (2000-03-15), pages 293-298, XP010512073,
- Tanaka, T et al: "Output control by hill-climbing method for a small scale wind power generating system", RENEWABLE ENERGY, vol. 12, no. 4, 1 December 1997 (1997-12-01), pages 387-400, XP004101206,
- "13.3 EXTREMUM CONTROL" In: Karl Johan Åström; Et Al: "Adaptive Control", 1 January 1989 (1989-01-01), XP055422311, pages 484-487,
- XIN MA: "Chapter 1", Adaptive extremum control and wind turbine control, 1 January 1997 (1997-01-01), pages i, 1-15,
- IMM publications 1997
- "13.3 EXTREMUM CONTROL" In: Jürgen Ernst-Cathor: "Drehzahlvariable Windenergieanlage mit Gleichstrom- zwischenkreis-Umrichter und Optimum-suchendem Regler", 1989

## Beschreibung

Die vorliegende Erfindung betrifft ein Verfahren zur Steuerung einer Windenergieanlage und eine Windenergieanlage mit einer Steuerungsvorrichtung zur Steuerung der Wiridenergieanlage.

Windenergieanlagen mit Steuerungen sind seit Jahren allgemein bekannt und werden inzwischen mit Erfolg eingesetzt. Dabei hat insbesondere die Steuerung einen großen Einfluss auf den Energieertrag einer Windenergieanlage.

Durch eine kontinuierliche Weiterentwicklung der Windenergieanlagen haben sich diese zu komplexen Anlagen entwickelt, in denen eine Vielzahl von Parametern und Einstellwerten aufeinander abgestimmt sein müssen, um einen möglichst optimalen Betrieb zu ermöglichen.

Aufgrund der hohen Komplexität der Anlagen und der hohen Entwicklungskosten für die Entwicklung bzw. Weiterentwicklung solcher Anlagen müssen für den Kauf einer solchen Anlage erhebliche Beträge aufgewendet werden. Es ist leicht nachvollziehbar, dass solche Aufwendungen nur dann akzeptabel sind, wenn die Windenergieanlage während ihrer Lebensdauer aus den sich aus ihrem Betrieb ergebenden Erlösen zusätzlich zu der Amortisation einen möglichst großen Überschuss erwirtschaften lassen.

Dieser Überschuss ist aber untrennbar verbunden mit der Leistungsausbeute einer Windenergieanlage und daher hat insbesondere für den Besitzer / Betreiber einer solchen Anlage die Maximierung des Ertrages eine nachvollziehbar hohe Priorität.

Andererseits sind schon ganz allgemein bei allen Produktionsvorgängen und angesichts der Komplexität von Windenergieanlagen sowie deren Dimensionen Abweichungen vom Idealmaß unvermeidbar. Dabei wird durch Toleranzgrenzen festgelegt, innerhalb welchen Bereiches solche Abweichungen noch als hinnehmbar angesehen werden.

Unabhängig von der Frage, ob eine solche Abweichung tatsächlich hinnehmbar ist oder nicht, bedeutet sie in jedem Fall eine Ertragseinbuße, da sie eine Abweichung von der optimalen Anordnung darstellt.

Ein Verfahren der eingangs genannten Art ist beispielsweise aus der DE 195 32 409 A1 des Anmelders bekannt. Bei diesem bekannten Verfahren zum Betreiben einer Windenergieanlage wird zur Begrenzung der Belastung der Windenergieanlage die Leistung der Windenergieanlage windgeschwindigkeitsabhängig ab einer vorbestimmbaren Windgeschwindigkeit vermindert, indem die Betriebsdrehzahl des Rotors bei Auftreten eines Windes mit einer Windgeschwindigkeit oberhalb eines Grenzwind- oder einer Anströmgeschwindigkeit reduziert wird. Aus US 5,402,332 ist ein Verfahren zum Optimieren der Effizienz eines eine Turbine und einen Generator aufweisenden Satzes von Maschinen für ein Wasserkraftwerk bekannt.

Eine Optimierungseinrichtung zur Ertragssteigerung bei Windenergieanlagen durch genauere Azimutnachführung ist aus DE-A1-19934415 bekannt.

Aufgabe der vorliegenden Erfindung ist es, ein Verfahren und eine Windenergieanlage der eingangs genannten Art derart weiterzubilden, dass Ertragseinbußen insbesondere durch Abweichungen im Bereich der Umwandlung der kinetischen Energie des Windes in elektrische Energie, also im Bereich von Rotor, Antriebsstrang und Generator so gering wie möglich sind.

Die Aufgabe wird durch ein Verfahren gemäß Anspruch 1 gelöst. Dabei liegt der Erfindung die Erkenntnis zugrunde, dass sich die Toleranzen innerhalb bekannter Bereiche bewegen und eine Variation wenigstens einer Betriebseinstellung wie z. B. des Blattwinkels, der Azimutposition, des Generatormomentes, etc. innerhalb dieses Toleranzbereiches demnach zu der optimalen Einstellung führen muss.

Um zu vermeiden, dass durch eine permanente Variation einer Betriebseinstellung letztlich eine größere Ertragseinbuße auftritt, werden diese Variationen in vorgebbaren Zeitabständen ausgeführt, so dass, wenn eine optimale Einstellung gefunden wurde, diese für einen vorgegebenen Zeitabschnitt beibehalten wird.

In einer besonders bevorzugten Ausführungsform der Erfindung werden die Zeitabstände abhängig von vorgebbaren Standort- und/oder Betriebsbedingungen variiert, so dass die Standortbesonderheiten, wie relativ gleichförmige oder turbulente Windströmung, Windrichtungswechsel, oder ähnliches berücksichtigt werden können.

In einer besonders bevorzugten Weiterbildung der Erfindung wird die Variation nach einer durch äußere Einflüsse ausgelösten Veränderung der Betriebseinstellung zeitnah ausgeführt. Ist die Zeit dabei hinreichend kurz, wird die Betriebseinstellung über den vorgegebenen Einstellwert hinaus und ggf. einen vorbestimmten Betrag in der entgegengesetzten Richtung zurück variiert, bis die optimale Einstellung gefunden ist. Dieser Vorgang entspricht annähernd einem Einschwing-Vorgang.

Besonders bevorzugt wird bei dem erfindungsgemäßen Verfahren die Differenz zwischen der Ausgangseinstellung und der variierten Einstellung mit dem optimalen Ertrag ermittelt und bei den nachfolgenden Veränderungen und/oder Variationen berücksichtigt. Auf diese Weise kann der Variationsvorgang, und damit die Erreichung maximalen Ertrages verkürzt werden.

In einer insbesondere bevorzugten Ausführungsform der Erfindung umfasst eine erfindungsgemäße Windenergieanlage eine Steuerungsvorrichtung, welche zur Ausführung des Verfahrens geeignet ist, wobei die Steuerungsvorrichtung einen Mikroprozessor oder Mikrocomputer und eine Speichervorrichtung aufweist.

Weitere vorteilhafte Ausführungsformen der Erfindung sind in den Unteransprüchen angegeben.

Im Folgenden wird ein Ausführungsbeispiel anhand der Figuren näher erläutert. Dabei zeigen:
- Figur 1: eine Darstellung des Grundprinzips der vorliegenden Erfindung an Hand eines Diagrammes;
- Figur 2: eine Darstellung eines verbesserten Grundprinzips ;
- Figur 3: eine weiter verbesserte Variante des erfindungsgemäßen Verfahrens;
- Figur 4: ein weiter optimiertes Verfahren; und
- Figur 5: ein zur Ertragsmaximierung noch weiter optimiertes, erfindungsgemäßes Verfahren.

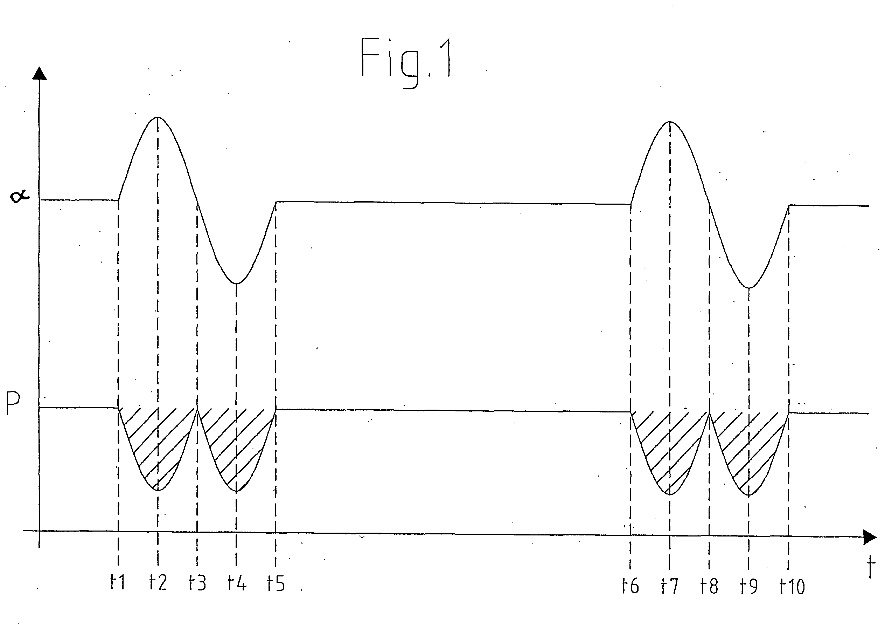

In Figur 1 ist das Grundprinzip des erfindungsgemäßen Verfahrens zur Steuerung einer Windenergieanlage dargestellt. In der Figur ist auf der Abszisse die Zeit t abgetragen, auf der Ordinate ist im oberen Teil die Variation einer Betriebseinstellung, wie z.B. des Azimutwinkels (α) der Gondel und damit des Rotors einer Windenergieanlage dargestellt, und im unteren Teil ist der Übersichtlichkeit halber in einer vereinfachten Darstellung der Verlauf des Ertrages in Form einer Leistungskennlinie (P) dargestellt.

Aus der oberen Kennlinie ist zu entnehmen, dass die Variation der Betriebseinstellung aus der Ausgangsposition heraus sinusförmig zunächst zum Zeitpunkt t1 in einer positiven Richtung beginnt, zum Zeitpunkt t2 einen Maximalwert erreicht und zum Zeitpunkt t3 wieder den Ausgangswert erreicht hat. Von dort wird nun die Variation in entgegengesetzter Richtung fortgesetzt, wobei sie zum Zeitpunkt t4 wiederum das Maximum erreicht und zum Zeitpunkt t5 wieder den Ausgangswert angenommen hat.

Ergibt sich nun während dieser Variation eine Ertragssteigerung, so kann die Betriebseinstellung entsprechend verändert werden, so dass die Windenergieanlage einen höheren Ertrag liefert.

Die untere Kennlinie zeigt den Ertrag, der in Abhängigkeit der Betriebseinstellung variiert. Zum Zeitpunkt t1, also mit Beginn der Variation nimmt der Ertrag bis zum Erreichen des Maximums der Variation zum Zeitpunkt t2 ab, und während die Einstellung wieder auf den Ausgangswert zurückgeführt wird (t3) nimmt der Ertrag wieder zu, bis auch er zum Zeitpunkt t3 seinen Ausgangswert erreicht. Bei der Umkehr der Variationsrichtung nimmt der Ertrag in dem vorliegenden Beispiel ebenfalls wieder ab, erreicht zum Zeitpunkt t4 das Minimum (das Maximum der Ertragsabnahme) und erreicht zum Zeitpunkt t5 wieder seinen Ausgangswert. Damit ist deutlich erkennbar, dass die Ausgangseinstellung der Windenergieanlage optimal war.

Zu einem vorgegebenen Zeitpunkt (in diesem Beispiel t6), nachdem ein vorgegebenes Intervall verstrichen ist, kann der Vorgang wiederholt werden.

Bei diesem Verfahren konkurrieren einerseits die Möglichkeit einer Ertragssteigerung und andererseits die durch die Variation einer optimalen Einstellung auftretenden Ertragseinbußen.

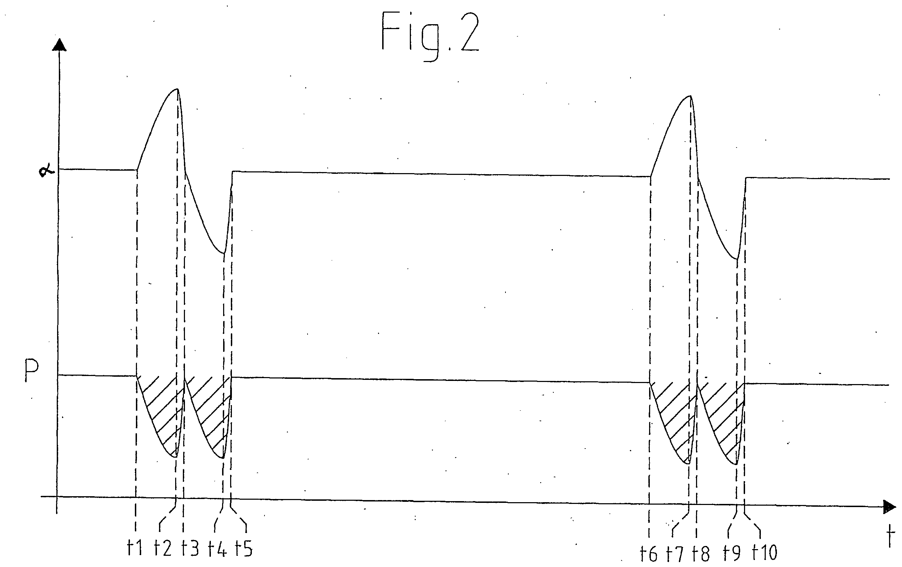

Eine Möglichkeit zur Verringerung dieser Ertragseinbußen ist in Figur 2 dargestellt. In dieser Figur ist auf der Abszisse wiederum die Zeit abgetragen, während auf der Ordinate die obere Kennlinie die Variation der Betriebseinstellung und die untere Kennlinie den Verlauf des Ertrages wiedergeben.

Während bei der Variation der Betriebseinstellung der Anstieg von dem Ausgangswert ausgehend nach wie vor sinusförmig ist, wird die Flankensteilheit des Signals nach Erreichen des Scheitelwertes erhöht, so dass die Rückkehr zum Ausgangswert schnellstmöglich erfolgt. Der Abstand zwischen den Zeitpunkten t1 und t2 bleibt im Vergleich zu Figur 1 im Wesentlichen unverändert; der Abstand zwischen den Zeitpunkten t2 und t3 wird jedoch deutlich verringert. Im Idealfall wird der Abstand zwischen t2 und t3 gegen Null gehen, so dass zumindest in einer ersten Näherung die Ertragseinbuße in diesem Abschnitt zwischen den Zeitpunkten t2 und t3 ebenfalls sehr klein wird.

Das Gleiche wiederholt sich für die negative Halbwelle, deren Anstieg wiederum sinusförmig ist und zwischen den Zeitpunkten t3 und t4 erfolgt, während die Rückkehr zur Ausgangseinstellung wiederum in dem Zeitraum zwischen t4 und t5 mit einer möglichst großen Steilheit erfolgt. Entsprechend werden die Ertragseinbußen annähernd halbiert. Nach einem vorgegebenen Intervall wiederholt sich dieser Ablauf beginnend mit dem Zeitpunkt t6. Da mit dem jeweils sinusförmig ansteigenden Ablauf jeder Halbwelle in der Variation jede Einstellung innerhalb des Variationsbereiches (des Toleranzbandes) erreicht und bewertet werden kann, verringert diese Ausführungsform die Ertragseinbußen durch die Variation, ohne die Effizienz der Variation selbst zu verändern.

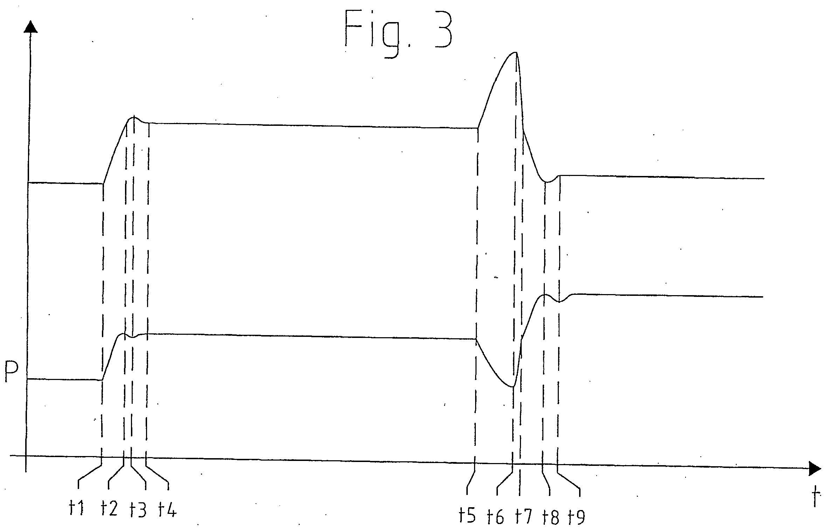

Figur 3 zeigt eine weitere Ausführungsform der vorliegenden Erfindung, bei welcher die Ertragseinbußen durch die Variation der Betriebseinstellungen noch weiter verringert werden. Die Aufteilung von Abszisse und Ordinate entsprechen derjenigen in den anderen Figuren. Auch hier beginnt zum Zeitpunkt t1 die Variation der Betriebseinstellung.

In dem dargestellten Beispiel steigt gleichzeitig der Ertrag bis zu einem Maximum an. Wird der Betrag der Variation weiter erhöht, sinkt der Ertrag wieder ab, d.h., das Ertragsmaximum und damit die optimale Betriebseinstellung sind überschritten. Daher wird bei diesem Verfahren die Erhöhung des Betrages der Variation abgebrochen und die Einstellung wieder hergestellt, bei der sich das Ertragsmaximum eingestellt hat.

Hier ergibt sich in der oberen Kennlinie ein "Überschwingen", da nach Erreichen des Ertragsmaximum natürlich erst einmal das Absinken des Ertrages erkannt werden muss, bevor die Betriebseinstellung für das Ertragsmaximum dann eingestellt werden kann. Dies ist bereits zum Zeitpunkt t4 geschehen, so dass die Variation in entgegengesetzter Richtung nicht mehr ausgeführt werden muss, da ja das Ertragsmaximum bereits gefunden ist. Zum Zeitpunkt t5 beginnt nach einem vorgegebenen Zeitabschnitt wiederum die Variation der Betriebseinstellung, wobei zum Zeitpunkt t6 der Maximalbetrag der Variation erreicht ist und bis t7 der Ausgangswert wieder hergestellt ist. Da sich hier eine Ertragseinbuße ergeben hat, wird nun die Variation der entgegengesetzten Richtung ausgeführt und zum Zeitpunkt t9 stellt sich nach einem Überschwingen bei t8 wiederum ein Ertragsmaximum ein, so dass die entsprechende Einstellung beibehalten wird.

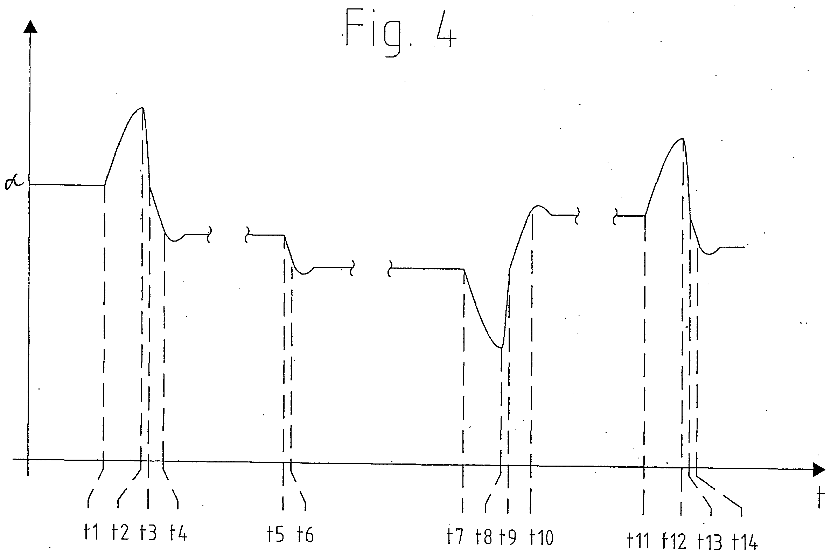

Eine weitere Ausführungsform der Erfindung ist in Figur 4 dargestellt. Hier ist die Abszisse wiederum die Zeitachse und die Ordinate zeigt die Variation der Betriebseinstellung. Die wesentliche Änderung gegenüber den oben beschriebenen Verfahren ist diejenige, dass als Anfangsrichtung für die Variation diejenige Richtung verwendet wird, bei der sich bei der vorherigen Variation eine Ertragssteigerung ergeben hat.

Zum Zeitpunkt t1 beginnt die Variation der Betriebseinstellung, erreicht zum Zeitpunkt t2 ihrer Maximum und zum Zeitpunkt t3 wiederum ihren Ausgangswert. Da es in dem angenommenen Beispiel zu keiner Ertragssteigerung gekommen sei, wird die Variation nun mit umgekehrtem Vorzeichen, also in der entgegengesetzten Richtung ausgeführt. Zum Zeitpunkt t4 wird ein Ertragsmaximum erreicht, und nach einem kurzen Überschwinger dieses Ertragsmaximum beibehalten.

Nach einem vorgegebenen Zeitabschnitt wird zum Zeitpunkt t5 wiederum "turnusmäßig" die Betriebseinstellung variiert und die Anfangsrichtung entspricht hier derjenigen Richtung, die bei der vorherigen Variation zu einer Ertragssteigerung führte, also der negativen Halbwelle. Zum Zeitpunkt t6 wird wiederum ein Ertragsmaximum erreicht, so dass diese Einstellung beibehalten wird. Damit entfällt die Ertragseinbuße völlig, die bei der positiven Halbwelle aufgetreten wäre.

Nach einem weiteren Zeitabschnitt beginnt zum Zeitpunkt t7 wiederum die Variation der Betriebseinstellung. Diese beginnt wiederum mit der negativen Halbwelle, da diese bei der vorherigen Variation wiederum zu einer Ertragssteigerung führte. In diesem Fall sei angenommen, dass dieses nicht der Fall ist, so dass zum Zeitpunkt t8 das Maximum erreicht wird und zum Zeitpunkt t9 der Ausgangswert wieder hergestellt ist. Nun wird wiederum die Richtung der Variation umgekehrt und an die negative Halbwelle schließt sich eine positive Halbwelle an, in der zum Zeitpunkt t10 das Ertragsmaximum erreicht wird, so dass dieser Wert nun beibehalten wird.

Zum Zeitpunkt t11 beginnt eine weitere Variation, dieses Mal mit der positiven Halbwelle, da diese bei der vorherigen Variation zu einer Ertragssteigerung führte. Zum Zeitpunkt t12 ist das Maximum erreicht und zum Zeitpunkt t13 wiederum die Ausgangseinstellung. Da zum Zeitpunkt t14 in diesem Beispiel wiederum ein Ertragsmaximum erreicht wird, wird diese Einstellung beibehalten, so dass die nachfolgende Variation wiederum mit der negativen Halbwelle beginnen wird.

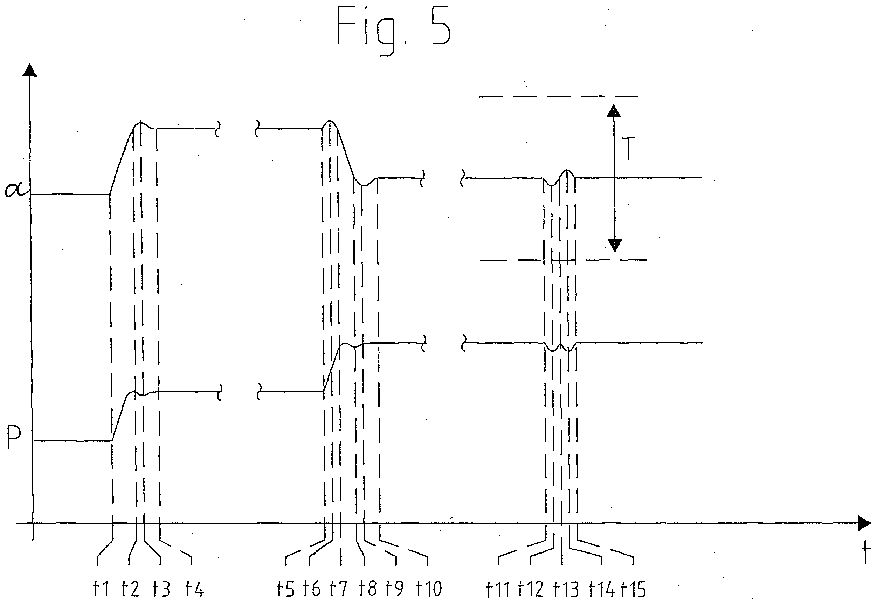

Figur 5 zeigt eine noch weiter verbesserte Ausführungsform der vorliegenden Erfindung. In dieser Figur ist die Abszisse wiederum die Zeitachse, während die Ordinate im oberen Teil die Veränderung einer Betriebseinstellung und im unteren Teil wiederum den Ertragsverlauf zeigt. Bei dieser Ausführungsform des erfindungsgemäßen Verfahrens werden Ertragseinbußen infolge der Variation noch weiter verringert. Dieses wird mit dem erfindungsgemäßen Verfahren dadurch erreicht, das bei der Feststellung einer Ertragseinbuße die Variationsrichtung umgekehrt wird. Kommt es nach der Umkehr der Variationsrichtung wiederum zu einer Ertragseinbuße, wird die Variation abgebrochen.

In der Figur 5 beginnt die Variation wiederum zum Zeitpunkt t1 mit einer positiven Halbwelle und zum Zeitpunkt t2 wird das Ertragsmaximum erreicht. Nach einem "Überschwinger" (t3) wird das Ertragsmaximum zum Zeitpunkt t4 eingestellt und für einen vorgegebenen Zeitabschnitt beibehalten, bis zum Zeitpunkt t5 wiederum eine Variation beginnt.

Diese beginnt wiederum mit einer positiven Halbwelle. Allerdings zeigt sich zum Zeitpunkt t6 bereits eine Ertragseinbuße. Daher wird die Variationsrichtung umgekehrt und die negative Halbwelle der Variation der Betriebseinstellung beginnt zum Zeitpunkt t7. Zum Zeitpunkt t8 wird ein Ertragsmaximum erreicht und nach einem Überschwinger (t9) wird zum Zeitpunkt t10 diese Einstellung beibehalten. Nach einem weiteren, vorgegebenen Zeitabschnitt wird zum Zeitpunkt t11 wiederum die Betriebseinstellung variiert.

Da bei der vorherigen Variation die negative Halbwelle zu einer Ertragssteigerung führte, beginnt auch diese Variation mit der negativen Halbwelle. Bereits zum Zeitpunkt t12 wird erkannt, dass diese Variationsrichtung zu einer Ertragseinbuße führt und die Variationsrichtung wird umgekehrt, so dass zum Zeitpunkt t13 wiederum der Ausgangswert erreicht ist und die positive Halbwelle beginnt.

Zum Zeitpunkt t14 wird erkannt, dass auch diese Variationsrichtung zu einer Ertragseinbuße führt, und der Variationsvorgang wird abgebrochen. Zum Zeitpunkt t15 ist die Ausgangs-Betriebseinstellung wieder hergestellt.

Um den wesentlichen Vorteil dieser Ausführungsform zu verdeutlichen, ist in der Figur die vorgegebene Variationsgrenze (T) in beiden Richtungen von der Ausgangseinstellung eingetragen. Aufgrund der erheblich kleineren Amplitude der Variation der Betriebseinstellung sind auch die Ertragseinbuße bei dieser Variation erheblich geringer. Der Möglichkeit einer signifikanten Ertragssteigerung steht damit eine vernachlässigbare Ertragseinbuße für den Fall entgegen, dass die Ausgangs-Betriebseinstellung bereits die optimale Betriebseinstellung ist.

Neben dem Ausgleich von unvermeidbaren Fertigungs- bzw. Montagetoleranzen, den diese Erfindung ermöglicht, kann durch das erfindungsgemäß vorgeschlagene Verfahren auch bei der Änderung äußerer Betriebsbedingungen, wie der Windrichtung eine Ertragssteigerung erfolgen, wenn die Änderung noch innerhalb der Toleranzbreite der Anlagen-Steuerung liegt. Ändert sich also z.B. die Windrichtung nur um einen geringen Betrag, dann wird die Azimutverstellung nicht in Folge der Windrichtungsänderung aktiviert. Trotzdem ergibt sich durch einen geringfügig veränderten Anström-Winkel eine geringe Ertragseinbuße. Diese kann durch das erfindungsgemäße Verfahren wieder ausgeglichen werden, wenn die Azimuteinstellung regelmäßig variiert wird.

Weiterhin ist ein Ausgleich von Montagefehlern möglich. Eine Fehlanzeige der Windfahne, z. B. durch einen Montagefehler, kann durch die erfindungsgemäße Steuerung ausgeglichen werden, sofern sie innerhalb der Toleranzbreite der Anlagen-Steuerung liegt. Dadurch kann eine durch die auf dem Anzeigeergebnis der Windfahne basierende, nicht optimale Energieausbeute optimiert werden.

Die Erfindung ist bevorzugt anzuwenden bei einem Satz von Betriebsparameter-Einstellungen. Bevorzugte Parameter sind hierbei die Pitch-Einstellung (Rotorblattwinkeleinstellung), die Azimuteiristellung (Rotoreinstellung) sowie der Erregerstrom des Generators zur Bestimmung des Generatormoments.

Je nach Windbedingurigen gibt es für die verschiedensten Parameter-Einstellungen einen Parametersatz, der zur Steuerung in Form einer Tabelle hinterlegt sein kann. Aus der dann gemessenen Windgeschwindigkeit ergibt sich für den konkreten Anlagetyp jeweils eine optimale Schnelllaufzahl (das Verhältnis der Umfangsgeschwindigkeit der Rotorblattspitze zur Windgeschwindigkeit) für einen maximalen Energieertrag. Da infolge der bekannten Rotor-Parameter das bei dieser Windgeschwindigkeit zur Verfügung stehende Drehmoment bekannt ist, kann ein optimales Generatormoment anhand der Vorgaben der Tabelle bestimmt werden.

Ist das Generatormoment nicht an die Schnelllaufzahl angepasst, ergeben sich daraus Nachteile. Bei zu niedrigem Generatordrehmoment erhöht sich die Schnelllaufzahl und der Rotor beschleunigt in unerwünschter Weise, weil der Wind eine entsprechende Energie zuführt. Bei zu hohem Generatormoment wird der Rotor hingegen zu weit gebremst, so dass der Rotor zu langsam läuft und dem Wind nicht die maximal mögliche Energie entnimmt. Da das Generatormoment aber von der Höhe des Erregerstroms direkt abhängig ist, ergibt sich eine Einstellmöglichkeit, um an dieser Stelle den Betrieb der Windenergieanlage im Sinne einer Optimierung zu beeinflussen.

Eine weitere Möglichkeit der erfindungsgemäßen Anwendung betrifft die Azimutanpassung, um einen eventuellen Gierwinkel möglichst gering ausfallen zu lassen, sowie die Einstellung des Anstellwinkels der Rotorblätter (Pitch), um wiederum ein maximales Drehmoment zu erreichen und dementsprechend dem Wind ein Maximum an Energie zu entziehen.

## Patentansprüche

1. Verfahren zur Steuerung einer Windenergieanlage, um die Energieausbeute zu maximieren, wobei wenigstens eine Betriebseinstellung innerhalb vorgegebener Grenzen (T) variiert wird, wobei der Rotorblatt-Anstellwinkel und/oder die Azimuteinstellung variiert wird, um zu einer optimalen Einstellung zu kommen, und wobei die Variationen in vorgebbaren Zeitabständen ausgeführt werden, um zu vermeiden, dass durch eine permanente Variation einer Betriebseinstellung letztlich eine größere Ertragseinbuße auftritt, so dass, wenn eine optimale Einstellung gefunden wurde, diese für einen vorgegebenen Zeitabschnitt beibehalten wird

2. Verfahren nach Anspruch 1,
**dadurch gekennzeichnet, dass** die Zeitabstände abhängig von vorgebbaren Standort- und / oder Betriebsbedingungen variiert werden.

3. Verfahren nach einem der vorstehenden Ansprüche,
**dadurch gekennzeichnet, dass** die Variation um einen vorgegebenen Betrag von der Ausgangseinstellung in einer Richtung oder nacheinander in zwei entgegengesetzten Richtungen erfolgt.

4. Verfahren nach einem der vorstehenden Ansprüche,
**dadurch gekennzeichnet, dass** die Variation nach einer durch äußere Einflüsse ausgelösten Veränderung einer Betriebseinstellung ausgeführt wird.

5. Verfahren nach Anspruch 4,
**dadurch gekennzeichnet, dass** die Variation einen vorgegebenen Zeitabschnitt nach der Veränderung der Betriebseinstellung ausgeführt wird.

6. Verfahren nach einem der vorstehenden Ansprüche,
**dadurch gekennzeichnet, dass** zeitnah zu der Variation der Betriebseinstellung eine Schnelllaufzahl eines Rotorblattes erfasst wird.

7. Verfahren nach Anspruch 6,
**dadurch gekennzeichnet, dass** eine Differenz zwischen der Ausgangseinstellung und der variierten Einstellung mit der höchsten Schnelllaufzahl ermittelt wird.

8. Verfahren nach Anspruch 7,
**dadurch gekennzeichnet, dass** die ermittelte Differenz bei jeder nachfolgenden, durch äußere Einflüsse ausgelösten Veränderung der Betriebseinstellung berücksichtigt wird.

9. Verfahren nach einem der vorstehenden Ansprüche,
**dadurch gekennzeichnet, dass** die variierte Einstellung, die Richtung und der Betrag der Variation gespeichert und/oder ausgewertet werden.

10. Verfahren nach einem der vorstehenden Ansprüche,
**dadurch gekennzeichnet, dass** der Betrag der Variation mit einer ersten Geschwindigkeit gesteigert und mit einer zweiten Geschwindigkeit verringert wird.

11. Verfahren nach Anspruch 10,
**dadurch gekennzeichnet, dass** die erste Geschwindigkeit geringer als die zweite Geschwindigkeit ist.

12. Verfahren nach einem der vorstehenden Ansprüche,
**dadurch gekennzeichnet, dass** die Variation nach Erreichen eines Ertragsmaximum abgebrochen und die Einstellung mit dem Ertragsmaximum beibehalten wird.

13. Verfahren nach einem der vorstehenden Ansprüche,
**dadurch gekennzeichnet, dass** die Variationsrichtung, die bei der vorausgehenden Variation zu einer Ertragssteigerung führte, als Anfangsrichtung für die Variation verwendet wird.

14. Verfahren nach einem der vorstehenden Ansprüche,
**dadurch gekennzeichnet, dass** die Variationsrichtung bei einer Ertragsverringerung umgekehrt wird.

15. Verfahren nach Anspruch 14,
**dadurch gekennzeichnet, dass** nach einer Ertragsverringerung nach einer Umkehr der Variationsrichtung die Variation beendet wird.

16. Windenergieanlage vorbereitet zur Durchführung des Verfahrens nach einem der vorhergehenden Ansprüche, wobei die Windenergieanlage einen Rotor, einen damit verbundenen Generator sowie eine Steuerungseinrichtung zur Steuerung jeder Blatteinstellung der Rotorblätter eines Rotors und/oder zur Ausrichtung des Rotors zum Wind aufweist.

17. Windenergieanlage nach Anspruch 16,
**dadurch gekennzeichnet, dass** die Steuerungsvorrichtung wenigstens einen Mikroprozessor oder Mikrocomputer und Speicher enthält.

## Claims

1. Method for controlling a wind turbine in order to maximise the power yield, wherein at least one operational setting is varied within predefined limits (T), wherein the rotor blade pitch angle and/or the azimuth setting is varied in order to obtain an optimal setting, and wherein the variations are performed at predefinable time intervals, to avoid a situation in which constant variation of an operational setting ultimately causes even greater loss of yield, so that whenever an optimal setting has been found, this is then maintained for a predefined period.

2. Method according to claim 1,
**characterised in that** the time intervals are varied in response to predefinable ambient and/or operating conditions.

3. Method according to one of the preceding claims,
**characterised in that** the variations are by a predefined amount in one direction, starting from the initial setting, or successively in two opposing directions.

4. Method according to one of the preceding claims,
**characterised in that** the variation is performed after a change in an operational setting has been caused by external factors.

5. Method according to claim 4,
**characterised in that** the variation is performed a predefined period after the operational setting has been changed.

6. Method according to one of the preceding claims,
**characterised in that** a tip speed ratio of a rotor blade is detected contemporaneously with the variation of the operational setting.

7. Method according to claim 6,
**characterised in that** a difference between the initial setting and the varied setting with the highest tip speed ratio is quantified.

8. Method according to claim 7,
**characterised in that** the quantified difference is taken into account in every subsequent change of operational setting in response to external factors.

9. Method according to one of the preceding claims,
**characterised in that** the varied setting, the direction and the amount of variation are stored and/or analysed.

10. Method according to one of the preceding claims,
**characterised in that** the amount of variation is increased with a first speed and reduced with a second speed.

11. Method according to claim 10,
**characterised in that** the first speed is less than the second speed.

12. Method according to one of the preceding claims,
**characterised in that** the variation is discontinued after reaching a maximum power yield and the setting is maintained at the maximum power yield.

13. Method according to one of the preceding claims,
**characterised in that** the direction of variation that led in the preceding variation phase to an increase in power yield is used as the direction for the variation.

14. Method according to one of the preceding claims,
**characterised in that** the direction of variation is reversed if the power yield has decreased.

15. Method according to claim 14,
**characterised in that** the variation is terminated after a power yield reduction occurs following a reversal of the direction of variation.

16. Wind turbine prepared for performing the method according to any one of the preceding claims, wherein the wind turbine comprises a rotor, a generator connected thereto and a controller for controlling the pitch of the rotor blades of a rotor and/or for setting the attitude of the rotor to the wind.

17. Wind turbine according to claim 16,
**characterised in that** the controller includes at least one microprocessor or microcontroller and a memory device.

## Revendications

1. Procédé de commande d'une turbine éolienne, permettant de maximiser le rendement énergétique, dans lequel on fait varier au moins un réglage de fonctionnement à l'intérieur de limites prédéterminées (T), dans lequel on fait varier l'angle d'attaque des pales du rotor et/ou le réglage de l'azimut afin de parvenir à un réglage optimal, et dans lequel on opère les variations à des intervalles de temps pouvant être prédéfinis pour éviter l'apparition pour finir de pertes de rendement plus importantes du fait d'une variation permanente d'un réglage de fonctionnement de sorte que, quand un réglage optimal a été trouvé, celui-ci est conservé pour une période de temps prédéfinie.

2. Procédé selon la revendication 1, **caractérisé en ce que** l'on fait varier les intervalles de temps en fonction de conditions de localisation et/ou de fonctionnement pouvant être prédéfinies.

3. Procédé selon l'une quelconque des revendications précédentes **caractérisé en ce que** l'on opère la variation dans une mesure prédéterminée à partir d'un réglage initial dans une direction ou successivement dans deux directions opposées.

4. Procédé selon l'une quelconque des revendications précédentes, **caractérisé en ce que** l'on effectue cette variation après un réglage de fonctionnement provoqué par des influences extérieures.

5. Procédé selon la revendication 4, **caractérisé en ce que** l'on effectue cette variation à un laps de temps prédéterminé après la modification du réglage de fonctionnement.

6. Procédé selon l'une quelconque des revendications précédentes, **caractérisé en ce que** l'on détecte un rapport de vitesse de pointe d'une pale de rotor à un instant proche de la variation du réglage de fonctionnement.

7. Procédé selon la revendication 6, **caractérisé en ce que** l'on détermine une différence entre le réglage initial et le réglage variable correspondant à la vitesse de pointe la plus élevée.

8. Procédé selon la revendication 7, **caractérisé en ce que** l'on tient compte de la différence déterminée lors de chaque modification ultérieure du réglage de fonctionnement provoquée par des influences extérieures.

9. Procédé selon l'une quelconque des revendications précédentes, **caractérisé en ce que** l'on mémorise et/ou on analyse le réglage modifié, la direction et le montant de la variation.

10. Procédé selon l'une quelconque des revendications précédentes, **caractérisé en ce que** l'on augmente le montant de la variation avec une première vitesse et on le réduit avec une deuxième vitesse.

11. Procédé selon la revendication 10, **caractérisé en ce que** la première vitesse est inférieure à la deuxième vitesse.

12. Procédé selon l'une quelconque des revendications précédentes, **caractérisé en ce que** l'on interrompt la variation après avoir atteint un rendement maximum et on conserve le réglage correspondant au rendement maximum.

13. Procédé selon l'une quelconque des revendications précédentes, **caractérisé en ce que** l'on utilise la direction de variation, qui a conduit à une augmentation du rendement lors de la variation précédente, comme direction initiale pour la variation.

14. Procédé selon l'une quelconque des revendications précédentes, **caractérisé en ce que** l'on inverse la direction de variation lors d'une baisse du rendement.

15. Procédé selon la revendication 14, **caractérisé en ce que** l'on termine la variation après une baisse du rendement après une inversion de la direction de variation.

16. Turbine éolienne préparé pour la mise en œuvre du procédé selon l'une quelconque des revendications précédentes, dans laquelle la turbine éolienne présente un rotor, un générateur relié à celui-ci ainsi qu'un dispositif de commande pour la commande du réglage de pale des pales de rotor d'un rotor et/ou pour l'orientation du rotor par rapport au vent.

17. Turbine éolienne selon la revendication 16, **caractérisée en ce que** le dispositif de commande comprend au moins un microprocesseur ou un microordinateur et une mémoire.
